(19) Europäisches Patentamt
European Patent Office
Office européen des brevets

(11) **EP 1 999 918 B1**

(12) **FASCICULE DE BREVET EUROPEEN**

(45) Date de publication et mention
de la délivrance du brevet:
**24.02.2010 Bulletin 2010/08**

(21) Numéro de dépôt: **07731720.4**

(22) Date de dépôt: **09.03.2007**

(51) Int Cl.:
***H04L 25/03*** *(2006.01)*

(86) Numéro de dépôt international:
**PCT/FR2007/050904**

(87) Numéro de publication internationale:
**WO 2007/110522 (04.10.2007 Gazette 2007/40)**

(54) **Procédé et dispositif de réception d'un signal de données composé de blocs de symboles et programme d'ordinateur correspondant**

Verfahren und Einrichtung zum Empfangen eines aus Symbolblöcken bestehenden Datensignals und entsprechendes Computerprogramm

Method and device for receiving a data signal consisting of symbol blocks and corresponding computer program

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **27.03.2006 FR 0602663**

(43) Date de publication de la demande:
**10.12.2008 Bulletin 2008/50**

(73) Titulaire: **FRANCE TELECOM**
**75015 Paris (FR)**

(72) Inventeurs:
• **BOHER, Laurent**
**F-35000 Rennes (FR)**
• **HELARD, Maryline**
**F-35700 Rennes (FR)**
• **RABINEAU, Rodrigue**
**F-35000 Rennes (FR)**

(74) Mandataire: **Guéné, Patrick**
**Cabinet Vidon**
**Technopôle Atalante**
**16B, rue de Jouanet**
**35703 Rennes Cedex 7 (FR)**

(56) Documents cités:
**EP-A- 1 453 262**

• **BOUVET P-J ET AL: "Low complexity iterative receiver for non-orthogonal space-time block code with channel coding" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 septembre 2004 (2004-09-26), pages 1289-1293, XP010786832 ISBN: 0-7803-8521-7**
• **DEJONGHE A ET AL: "A comparison of bit and symbol interleaving in MMSE turbo-equalization" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 mai 2003 (2003-05-11), pages 2928-2932, XP010642981 ISBN: 0-7803-7802-4**
• **LEE S J ET AL.: "Area-Efficient High-Throughput MAP Decoder Architectures" IEEE TRANSACTIONS ON VERY LARGE SCALE INTEGRATION (VLSI), vol. 13, no. 8, 1 août 2005 (2005-08-01), pages 921-933, XP011139871 PISCATAWAY US**

**Description**

**1. Domaine de l'invention**

Le domaine de l'invention est celui des communications numériques. Plus précisément, l'invention concerne, dans un système de communications numériques, une technique de réception d'un signal de données reçu composé de blocs de symboles formés chacun d'un ensemble de bits.

L'invention concerne plus particulièrement une technique de réception itérative, mettant en oeuvre un mécanisme d'annulation d'interférences affectant un ou plusieurs symboles du signal reçu.

Par interférences, on entend ici, et dans tout le document, tout type de perturbation (ou combinaison de perturbations) pouvant affecter le signal reçu, tel que de l'Interférence Entre Symboles (« IES »), l'interférence co-antenne, l'interférence due à un précodage, etc.

L'invention s'applique notamment, mais non exclusivement, aux systèmes de communications par voie hertzienne (transmission radio), présentant une ou plusieurs antennes à l'émission et/ou à la réception, tels que des systèmes SIMO (« Single Input Multiple Outputs » en anglais), SISO (« Single Input Single Output » en anglais), MIMO (« Multiple Inputs Multiple Outputs » en anglais), MISO (« Multiple Inputs Single Output » en anglais),..., mettant en oeuvre une modulation mono ou multi porteuses,...

**2. Art antérieur**

On discute ci-après les techniques de l'art antérieur à travers le cas particulier des systèmes MIMO-OFDM, c'est-à-dire des systèmes de communication multi-antennes mettant en oeuvre des modulations à sous porteuses orthogonales (« OFDM » pour « Orthogonal Frequency Division Multiplexing » en anglais).

Les systèmes MIMO-OFDM peuvent notamment mettre en oeuvre des techniques de réception itérative, permettant, au fil des itérations, d'améliorer la qualité de l'estimation du signal émis en fonction du signal reçu.

Comme on le verra par la suite, ces techniques reposent sur une mise en oeuvre successive et répétée de modules élémentaires, de sorte que ces différents modules s'échangent de l'information sur la fiabilité de l'opération réalisée.

On connaît de très nombreuses techniques de réception itérative pour les systèmes à antennes multiples en émission et/ou en réception.

Au sein de ces techniques itératives, on distingue notamment :

- les récepteurs mettant en oeuvre un algorithme de type Maximum de Vraisemblance (MV, ou en anglais « ML » pour « Maximum Likelihood »), qui présentent l'inconvénient d'induire une grande complexité de traitement ;
- les récepteurs à base de filtres linéaires, tels que ceux proposé par M.Sellathurai et S.Haykin dans « Turbo-BLAST for wireless communications: theory and experiments » (en français « Turbo-BLAST pour communications sans fil : théorie et expériences »), IEEE Transactions on Signal processing, vol. 50, n° 10, pp. 2538-2546, 2002. Ces récepteurs s'appuient sur des techniques de filtrage de type MMSE («Minimum Mean Square Error » pour «minimisation de l'erreur quadratique moyenne ») et d'annulation d'interférences. Ils présentent l'avantage, par rapport aux récepteurs à Maximum de Vraisemblance, d'être beaucoup moins complexes.

Parmi les algorithmes implémentés dans les récepteurs à base de filtres linéaires, certains, et c'est le cas de la présente invention, reposent sur une approximation qui consiste à considérer l'estimation des symboles parfaite dès la deuxième égalisation, pour le calcul des coefficients du filtre d'égalisation (aussi appelé par la suite bloc d'égalisation globale) qui ne sont alors calculés que deux fois pour chaque bloc.

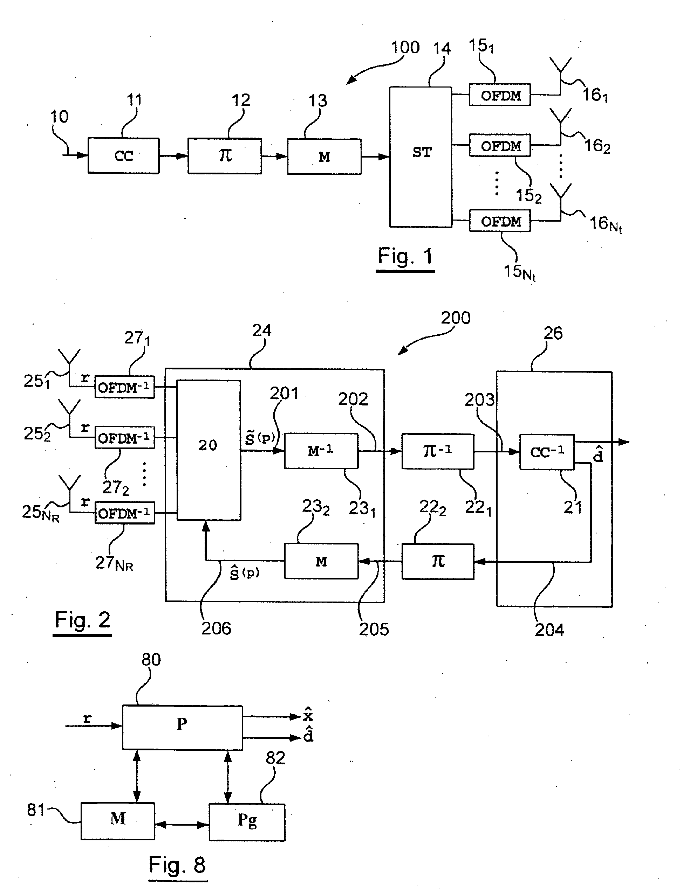

On décrit en référence à la figure 1, la chaîne fonctionnelle classique d'un dispositif d'émission 100 (couramment appelé émetteur) d'un signal source 10 composé d'éléments binaires, dans le cas d'un contexte de transmission de type MIMO-OFDM.

Le signal source (binaire) 10 à émettre subit un codage canal CC 11, puis un entrelacement $\Pi$ 12. Il traverse ensuite un module de « mapping » M 13, destiné à convertir des éléments binaires en symboles complexes : un tel module associe ainsi un groupe de bits à un symbole complexe appartenant à une constellation (de type QPSK, 16QAM, etc.). La suite de symboles délivrée en sortie du module de mapping M 13 est couramment appelée signal M-aire. On procède ensuite à un codage espace-temps en bloc14 de chaque groupe de Q symboles, qui sont ensuite modulés en blocs $15_1$, $15_2$ à $15_{Nt}$ selon une technique de modulation multiporteuse de type OFDM, puis émis sur $N_t$ antennes d'émission $16_1$, $16_2$ à $16_{Nt}$.

Comme illustré sur la figure 2, la chaîne fonctionnelle classique d'un dispositif de réception 200 (couramment appelé récepteur) d'un signal émis par le dispositif d'émission 100 précité comprend deux étages, à savoir un « décodeur espace-temps » 24 (i.e. un convertisseur de symboles en éléments binaires) et un décodeur de canal 26, qui échangent des informations extrinsèques ou a posteriori dans une boucle itérative, jusqu'à ce que le récepteur converge. Ces étages peuvent notamment être séparés par un entrelaceur $22_1$, utilisé pour décorréler les sorties, avant de les fournir à l'étage de décodage suivant, en d'autres termes, les informations échangées sont décorrélées d'un étage à l'autre.

Ainsi, un signal **r** est reçu sur $N_R$ antennes de réception référencées $25_1$ à $25_{NR}$, puis démodulé en blocs $27_1$, $27_2$ à $27_{NR}$ selon une technique de démodulation, inverse de la technique de modulation multiporteuse mise en oeuvre à l'émission. Chaque antenne de réception $25_1$ à $25_{NR}$ reçoit une combinaison linéaire des symboles émis sur chacune des $N_t$ antennes d'émission. Le premier étage de décodage 24 comprend un premier bloc 20 de décodage linéaire espace-temps (aussi appelé par la suite bloc d'égalisation globale) suivant un critère, par exemple, de type MMSE ou « Zero Forcing » (« ZF » pour « forçage à zéro »). Le signal égalisé $\tilde{s}^{(p)}$ délivré en sortie du bloc de décodage espace-temps 20 alimente ensuite un module de « demapping » $M^{-1}$ $23_1$, avant de subir une opération de désentrelacement $\Pi^{-1}$ $22_1$ puis un décodage de canal $CC^{-1}$ 21. En sortie du deuxième étage 26 de décodage de canal, on obtient un signal binaire souple estimé $\hat{d}$ sur les bits codés (on rappelle que les données sur les bits utilisés dans le processus itératif sont dites souples car leur valeur dépend de la probabilité des bits).

Le procédé étant itératif, on fait subir à ce signal binaire souple estimé $\hat{d}$ un nouvel entrelacement $\Pi$ $22_2$ et un nouveau « mapping » M $23_2$, afin d'obtenir un signal M-aire estimé $\hat{s}^{(p)}$, que l'on peut réinjecter dans le bloc 20 de décodage espace-temps pour une itération suivante d'amélioration de l'estimation du signal reçu.

Lors de la première itération, le récepteur procède à une égalisation classique du signal reçu car aucun symbole estimé n'est disponible. Lors des itérations suivantes en revanche, les symboles estimés précédemment sont utilisés par l'égaliseur pour annuler une (des) interférence(s) affectant le signal reçu.

De façon classique, les récepteurs à base de filtres linéaires mettent en oeuvre des mécanismes d'annulation d'interférences qui reposent sur l'utilisation de blocs de symboles.

Selon cette technique de réception itérative, il est nécessaire que tous les bits qui composent les symboles d'un bloc espace-temps soient décodés pour soustraire les interférences affectant les symboles qui composent le signal reçu.

Plus précisément (en référence à la figure 2), le module de « demapping » $M^{-1}$ $23_1$, qui travaille symbole par symbole, reçoit un bloc 201 de symboles égalisés composé de Q symboles égalisés (correspondant au signal égalisé $\tilde{s}^{(p)}$) et délivre des paquets 202 de nb bits convertis.

Le module de désentrelacement $\Pi^{-1}$ $22_1$ traite tous les nb bits convertis, bloc de bits par bloc de bits (le bloc de bits étant de taille égale à la taille de désentrelacement du module $22_1$), et délivre des blocs 203 de bits désentrelacés.

Le module de décodage canal $CC^{-1}$ 21 reçoit les blocs 203 de bits désentrelacés et délivre, après une certaine latence, des blocs 204 de bits décodés, composés d'un ou plusieurs bits.

Le module d'entrelacement $\Pi$ $22_2$ traite tous les blocs 204 de bits décodés, bloc de bits par bloc de bits (le bloc de bits étant de taille égale à la taille d'entrelacement du module $22_2$), et délivre des blocs 205 de bits entrelacés.

Ensuite, le module de « mapping » M $23_2$, qui travaille par paquet de nb bits, reçoit les blocs 205 de bits entrelacés et délivre des symboles estimés 206.

Enfin, le bloc 20 d'égalisation globale attend d'avoir Q symboles estimés en entrée pour déterminer un bloc de symboles égalisés amélioré par annulation des interférences.

Un tel dispositif est connu du document BOUVET P-J ET AL: "Low complexity iterative receiver for non-orthogonal space-time block code with channel coding" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 septembre 2004 (2004-09-26), pages 1289-1293, XP010786832 ISBN: 0-7803-8521-7.

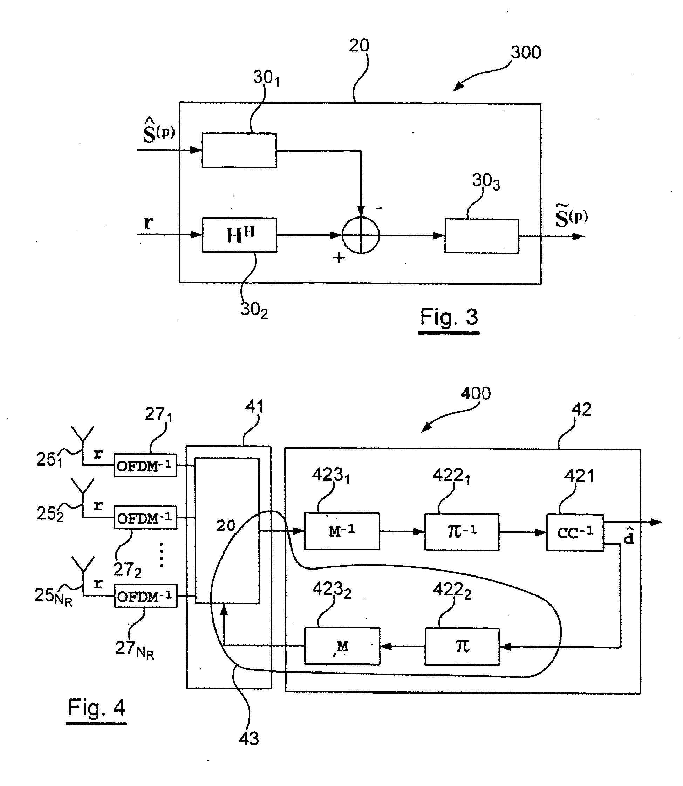

On décrit maintenant en relation avec la figure 3, la chaîne fonctionnelle classique d'un mécanisme d'annulation d'interférences 300 de type MMSE-IC (« MMSE Interference Canceler » en anglais, pour « annuleur d'interférences suivant un critère MEQM (Minimisation de l'Erreur Quadratique Moyenne) » en français) mis en oeuvre par le dispositif de réception 200 précité.

Par souci de clarté, dans la suite de ce document, on utilise les notations suivantes :

- **H** désigne une matrice représentative du canal de transmission du signal 10 émis ;
- **I** désigne une matrice identité de taille QxQ ;
- $\sigma^2 = 1/SNR$ est la variance du bruit équivalent, également égale à l'inverse du rapport signal à bruit moyen observé sur chaque antenne de réception (SNR) ; et
- $G = H^H \cdot H$ est une matrice d'égalisation globale.

Le mécanisme d'annulation d'interférences 300 reçoit en entrée le signal M-aire estimé $\hat{s}^{(p)}$ et le signal reçu **r**. Il réalise les opérations suivantes :

- filtrage adapté $30_2$ du signal reçu **r** par application de la matrice transconjuguée du canal $H^H$ délivrant un signal filtré ;
- création $30_1$ des interférences à partir d'un signal M-aire estimé $\hat{s}^{(p)}$ par multiplication à gauche de ce signal M-aire estimé par une matrice d'interférences $\mathbf{J} = \mathbf{G}$ - *diag*($\mathbf{G}$). Plus généralement, cette matrice d'interférences doit au moins tenir compte de la matrice de canal $\mathbf{H}$ ;

- soustraction des interférences obtenues en sortie du bloc référencé $30_1$ au signal filtré obtenu en sortie du bloc de filtrage $30_2$ pour obtenir un signal amélioré;

- égalisation 303 du signal amélioré délivrant un signal M-aire égalisé $\widetilde{\mathbf{s}}^{(p)}$ par application de la matrice (*diag*($\mathbf{G}$) + $\sigma^2\mathbf{I}$)$^{-1}$ . Plus généralement, cette matrice. d'égalisation doit au moins tenir compte de la matrice de canal $\mathbf{H}$.

Ainsi, selon cette technique de réception itérative, on effectue une annulation d'interférences après l'estimation complète d'un bloc de symboles.

Un inconvénient de cette technique de l'art antérieur est qu'elle ne permet pas une gestion optimale de la puissance de calcul du récepteur, du fait de l'exécution séquentielle des différents modules élémentaires de la boucle itérative. En effet, un tel séquencement consiste à calculer, un par un, des symboles estimés, et à reconstruire, au fur et à mesure qu'un symbole estimé est disponible, un bloc de symboles estimés pour effectuer l'annulation des interférences. En d'autres termes, pour un bloc de symboles égalisés donné, il est nécessaire d'attendre l'estimation de tous les symboles pour exécuter les opérations relatives à l'annulation d'interférences. Ces opérations sont donc réparties de manière non uniforme, en ce sens que l'annulation d'interférence ne peut s'effectuer qu'après récupération de tous les bits du bloc spatio-temporel décodés puis réentrelacées.

En outre, les inventeurs ont constaté que la gestion séquentielle des modules élémentaires d'un récepteur, peut provoquer une augmentation des temps de traitement en réception lorsque les opérations d'annulation d'interférences sont traitées en série ou une augmentation de la complexité du récepteur lorsqu'elles sont traitées en parallèle.

## 3. Exposé de l'invention

L'invention propose une solution qui ne présente pas ces inconvénients de l'art antérieur, sous la forme d'un procédé de réception d'un signal de données reçu composé d'au moins un bloc de symboles reçu et représentatif d'un signal source. Le procédé de réception met en oeuvre une phase d'initialisation comprenant une étape d'égalisation bloc à bloc dudit signal reçu, délivrant pour chaque bloc de symboles reçu un bloc de symboles égalisés formés chacun d'un ensemble de bits.

Selon l'invention, un tel procédé de réception comprend au moins une itération d'amélioration d'une estimation dudit signal reçu comprenant les étapes suivantes, pour un bloc de symboles égalisés courant :

- obtention d'au moins un bit décodé, par décodage bit à bit d'un sous-ensemble courant d'au moins un bit appartenant audit bloc de symboles égalisés courant ;

- mise à jour d'au moins un symbole estimé lors de ladite phase d'initialisation ou mis à jour lors d'une itération d'amélioration précédente, en fonction du ou des bits décodés, délivrant un bloc de symboles estimés mis à jour, constitué du ou des bits décodés et d'au moins un bit décodé lors d'au moins une itération d'amélioration précédente ou lors de ladite phase d'initialisation ;

- détermination d'un bloc de symboles égalisés amélioré par annulation des interférences, tenant compte dudit bloc de symboles estimés mis à jour, ledit bloc de symboles égalisés amélioré devenant le bloc de symboles égalisés courant d'une éventuelle itération suivante.

Ainsi, l'invention repose sur une approche tout à fait nouvelle et inventive des techniques de réception itératives de signaux à annulation d'interférence. En effet, le procédé de l'invention permet de décoder de façon itérative un signal codé (et éventuellement précodé linéairement et/ou codé spatio-temporellement), en utilisant un égaliseur de type annuleur d'interférences dont les coefficients sont corrigés après chaque bit décodé, et non plus après une estimation complète des blocs de symboles comme le propose les techniques de l'art antérieur. On obtient ainsi une convergence rapide du processus d'estimation du signal vers les bornes optimales de convergence avec un nombre réduit d'opérations (calcul du LLR (pour « Log-Likelihood Ratio » en anglais), calcul des composantes phase ou quadrature d'un symbole, annulation d'interférences et égalisation,...).

Il est important de noter que par décodage bit à bit, on entend plusieurs schémas de décodage d'une trame de bits (1bit à 1 bit, 2bits à 2bits, 3bits à 3bits,...), excepté le cas où l'on décode tous les bits d'un symbole, en une seule itération.

Selon une caractéristique particulière de l'invention, ladite étape d'obtention comprend les étapes suivantes :

- extraction d'au moins un bit d'un desdits symboles égalisés, dits bits extraits ;

- mise à jour dudit sous-ensemble courant, à partir d'au moins un desdits bits extraits, délivrant un sous-ensemble mis à jour ;

- décodage canal dudit sous-ensemble mis à jour, délivrant le ou les bits décodés.

Selon un mode de réalisation particulier, ladite étape d'obtention met en oeuvre un désentrelacement desdits ensembles de bits desdits symboles égalisés dudit bloc de symboles égalisés courant, inverse d'un entrelacement mis en oeuvre à l'émission.Selon un aspect particulier de l'invention, ledit désentrelacement restitue, dans un ordre d'origine, des bits entrelacés à l'émission selon un entrelacement distribuant lesdits bits uniformément dans lesdits blocs de symboles et garantissant que deux bits associés consécutivement à un bloc de symbole seront transmis dans deux symboles distincts.

Par uniformément, on entend que $nb_{bloc}$ bits consécutifs sont transmis dans $nb_{bloc}$ blocs de bits différents, où $nb_{bloc}$ est le nombre de blocs de bits contenus dans une trame. Notamment, le nombre $nb_{bloc}$ est choisi tel que la longueur de la trame est égale à la multiplication de l'ordre de modulation (i.e nombre de bits par symbole), du nombre de symboles par bloc et du nombre de blocs.

Selon une caractéristique particulière de l'invention, ledit désentrelacement est tel que deux bits désentrelacés consécutifs proviennent de deux positions de bits distinctes au sein de deux blocs de symboles égalisés distincts.

En particulier, pour un entrelaceur de taille $T = nb_{bloc} * Q * nb_{bit}$ et pour un bit donné occupant, avant désentrelacement, une position initiale définie par :

$$b * Q * nb_{bit} + s * nb_{bit} + p$$

ledit désentrelacement est tel que ledit bit donné occupe, après désentrelacement, une position finale définie par :

$$\Pi_p(p, s, \Pi_b(b)) * Q * nb_{bloc} + \Pi_s(s, \Pi_b(b)) * nb_{bloc} + \Pi_b(b)$$

où:

    $nb_{bloc}$ correspond au nombre de blocs de symboles ;
    $Q$ correspond au nombre de symboles formant un desdits blocs ;
    $nb_{bit}$ correspond au nombre de bits formant un desdits symboles
    $\Pi_b(b)$ désigne la loi permettant la distribution des blocs de symboles
    $\Pi_s(s, \Pi_b(b)) = (s - \Pi_b(b)) \bmod(Q)$ désigne la loi permettant la distribution des symboles à l'intérieur de chaque bloc de symboles ;
    $\Pi_p(p, s, \Pi_b(b)) = (p - \Pi_b(b) - \varepsilon * (\Pi_b(b)/Q) + \Pi_s(s, \Pi_b(b))) \bmod(nb_{bit})$ désigne
    la loi permettant la distribution des bits à l'intérieur de chaque symbole, avec :

$$\varepsilon = \begin{cases} 1 & si \quad Q \bmod(nb_{bit}) = 0 \\ 0 & si \quad Q \bmod(nb_{bit}) > 0 \end{cases}$$

Dans un autre mode de réalisation, l'invention concerne un dispositif de réception d'un signal de données reçu composé d'au moins un bloc de symboles reçu et représentatif d'un signal source, le dispositif de réception comprend des moyens d'initialisation comprenant des moyens d'égalisation bloc à bloc dudit signal reçu, délivrant pour chaque bloc de symboles reçu un bloc de symboles égalisés formés chacun d'un ensemble de bits, et des moyens d'amélioration d'une estimation dudit signal reçu, mettant en oeuvre au moins une fois, sous la forme d'une itération, et pour un bloc de symboles égalisés courant :

- des moyens d'obtention d'au moins un bit décodé, par décodage bit à bit d'un sous-ensemble d'au moins un bit appartenant audit bloc de symboles égalisés courant ;
- des moyens de mise à jour d'au moins un symbole estimé lors de ladite phase d'initialisation ou mis à jour lors d'une itération d'amélioration précédente, en fonction du ou des bits décodés, délivrant un bloc de symboles estimés mis à jour, constitué du ou des bits décodés et d'au moins un bit décodé lors d'au moins une itération d'amélioration précédente ou lors de ladite phase d'initialisation ;
- des moyens de détermination d'un bloc de symboles égalisés amélioré par annulation des interférences, tenant compte dudit bloc de symboles estimés mis à jour, ledit bloc de symboles égalisés amélioré devenant le bloc de symboles égalisés courant d'une éventuelle itération suivante.

Un tel dispositif de réception est notamment adapté à mettre en oeuvre le procédé de réception décrit précédemment.

Un autre aspect de l'invention concerne également un produit programme d'ordinateur téléchargeable depuis un réseau de communication et/ou enregistré sur un support lisible par ordinateur et/ou exécutable par un processeur comprenant des instructions de code de programme pour l'exécution des étapes du procédé de réception décrit précédemment, lorsque le programme est exécuté sur un ordinateur.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, déjà commentée en relation avec l'art antérieur, présente un synoptique du schéma d'émission d'une technique de l'art antérieur ;
- la figure 2, également commentée en relation avec l'art antérieur, illustre le récepteur du signal émis selon le schéma de la figure 1 ;
- la figure 3, aussi commentée en relation avec l'art antérieur, présente un module élémentaire du récepteur de la figure 2 mettant en oeuvre une annulation d'interférences ;
- la figure 4 illustre la structure d'un mode de réalisation particulier d'un récepteur selon l'invention ;
- la figure 5 présente un organigramme d'un mode de réalisation particulier du procédé de réception de l'invention ;
- la figure 6 illustre schématiquement les mises à jour effectuées sur les bits et les symboles lors d'une itération d'amélioration de l'estimation du signal reçu de l'invention ;
- la figure 7 présente le nombre d'opérations à effectuer au cours d'une itération par un récepteur itératif de l'invention ; et
- la figure 8 présente un schéma synoptique simplifié d'un récepteur de l'invention.

## 5. Description d'un mode de réalisation de l'invention

Le principe général de l'invention repose sur une réception itérative d'un signal de données reçu composé de blocs de symboles et représentatif d'un signal source. Cette réception itérative met en oeuvre une annulation d'interférence à partir d'un égaliseur de type annuleur d'interférences dont les coefficients sont mis à jour après chaque bit décodé, et non plus après une estimation complète des blocs de symboles. On procède ainsi à une égalisation linéaire du signal reçu, qui est efficace en terme de nombre d'opérations à effectuer au cours d'une itération.

Cette réception itérative peut être mise en oeuvre dans un contexte de transmission mono ou multi-antennes, dans un système multi-utilisateurs ou non, avec ou sans précodage linéaire à l'émission, en mono ou multi porteuses. Elle peut également s'appliquer aux systèmes mettant en oeuvre des modulations codées par treillis.

On présente, en relation avec la figure 4, la chaîne fonctionnelle d'un dispositif de réception 400 selon un mode de réalisation de l'invention.

Dans ce mode de réalisation, le dispositif de réception 400 selon l'invention comprend :

- des moyens d'égalisation 41 bloc à bloc d'un signal reçu, jouant le rôle du bloc de décodage espace-temps 20 décrit en relation avec la figure 2 ; et
- des moyens d'amélioration 42 d'une estimation du signal reçu spécifiques à l'invention.

Comme on le verra dans la suite de la description, les moyens d'amélioration 42 d'une estimation du signal reçu comprennent un module de décodage canal bit à bit $CC^{-1}$ 421 (aussi appelé moyens d'obtention de bit décodé) et des moyens de détermination 43 d'un bloc de symboles égalisés amélioré par annulation d'interférences.

De façon plus détaillée, les moyens d'égalisation 41 bloc à bloc reçoivent un signal reçu r (composé de blocs de symboles reçus), via $N_R$ antennes de réception référencées $25_1$ à $25_{NR}$, et délivrent en sortie un bloc de symboles égalisés (d'au moins un symbole).

Un module de « demapping » $M^{-1}$ $423_1$, qui travaille symbole par symbole, reçoit le bloc de symboles égalisés et délivre un ou plusieurs bits convertis.

Après une certaine latence, un module de désentrelacement $\Pi^{-1}$ $422_1$ met en oeuvre un désentrelacement, inverse d'un entrelacement mis en oeuvre à l'émission, d'un sous-ensemble de bits convertis (d'au moins un bit), de façon à délivrer, un par un, (un ou) des bits désentrelacés.

Dans le présent mode de réalisation, le désentrelacement restitue, dans un ordre d'origine, des bits entrelacés à l'émission selon un entrelacement distribuant les bits de façon à garantir que deux bits d'un des blocs de symboles reçus sont distants l'un de l'autre, avant entrelacement, d'une longueur supérieure à la longueur de la séquence de bits nécessaire pour décoder un bit en cours de décodage canal.

Plus précisément, dans le mode de réalisation illustré, on met en oeuvre un module de désentrelacement $\Pi^{-1}$ $422_1$ de taille $T = nb_{bloc}*Q* nb_{bit}$, où :

- $nb_{bloc}$ correspond au nombre de blocs espace-temps (i.e blocs de symboles) ;
- Q correspond au nombre de symboles formant un bloc espace-temps ;
- $nb_{bit}$ correspond au nombre de bits formant un symbole.

Plus précisément encore, on procède à un désentrelacement de bits entrelacés, de sorte qu'un bit occupant, avant désentrelacement, une position initiale définie par :

$$ b * Q * nb_{bit} + s * nb_{bit} + p $$

occupe, après désentrelacement, une position finale définie par :

$$ \Pi_p(p,s,\Pi_b(b)) * Q * nb_{bloc} + \Pi_s(s,\Pi_b(b)) * nb_{bloc} + \Pi_b(b), $$

où :

- $\Pi_b(b)$ désigne la loi permettant la distribution des blocs espace-temps ;
- $\Pi_s(s,\Pi_b(b)) = (s - \Pi_b(b)) \bmod(Q)$ désigne la loi permettant la distribution des symboles à l'intérieur de chaque bloc espace-temps ;
- $\Pi_p(p,s,\Pi_b(b)) = (p-\Pi_b(b)-\varepsilon*(\Pi_b(b)/Q)+\Pi_s(s,\Pi_b(b)))\bmod(nb_{bit})$ désigne la loi permettant la distribution des bits (i.e dispersion de la position des bits) à l'intérieur de chaque symbole, avec :

$$ \varepsilon = \begin{cases} 1 & si \quad Q\bmod(nb_{bit}) = 0 \\ 0 & si \quad Q\bmod(nb_{bit}) > 0 \end{cases} $$

Ainsi, dans ce mode de réalisation, le désentrelacement est tel que deux bits désentrelacés consécutifs proviennent de deux positions de bits distinctes au sein de deux blocs de symboles égalisés distincts.

Bien entendu, dans un autre mode de réalisation, un autre schéma de désentrelacement peut être envisagé.

Comme illustré sur la figure 4, un module de décodage canal CC$^{-1}$ 421 met en oeuvre un décodage bit à bit d'un sous-ensemble de bits désentrelacés (d'au moins un bit), de façon à délivrer, un par un, (un ou) des nouveaux bits décodés.

Après une certaine latence, un module d'entrelacement $\Pi$ $422_2$ met en oeuvre un entrelacement d'un sous-ensemble de bits (d'au moins un nouveau bit décodé), de façon à délivrer, un par un, (un ou) des nouveaux bits entrelacés.

Dès qu'un nouveau bit entrelacé est disponible en entrée d'un module de « mapping » M $423_2$, ce dernier délivre en sortie un nouveau symbole estimé (aussi appelé symbole estimé mis à jour).

Enfin, les moyens de détermination 43 mettent à jour l'annulation d'interférences sur un des symboles du signal reçu r, à partir du nouveau symbole estimé et du ou des symboles estimés précédents, de façon à obtenir un bloc de symboles égalisés amélioré.

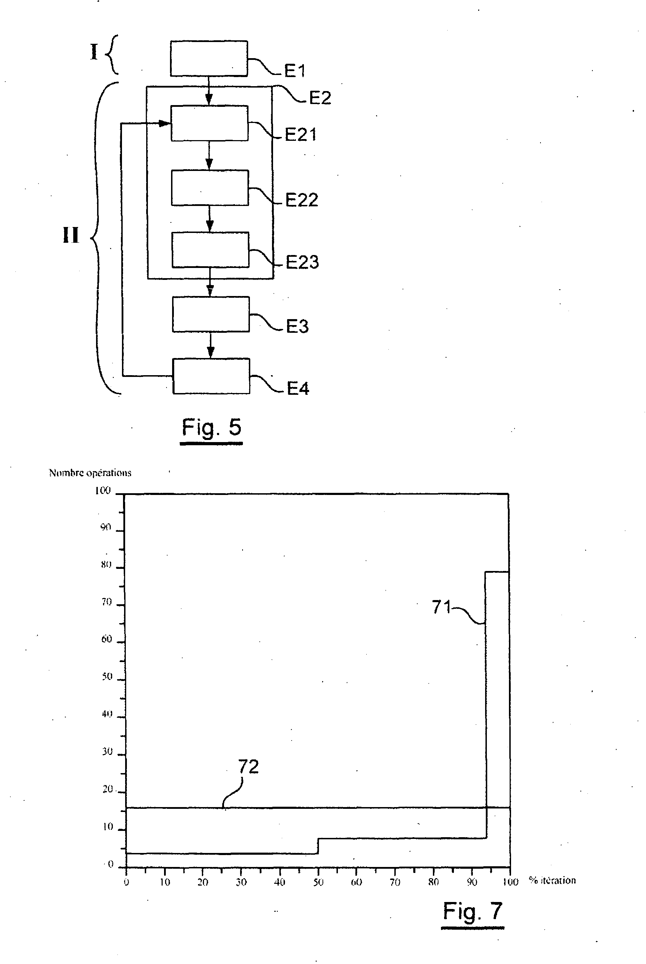

On présente, en relation avec la figure 5, un organigramme illustrant de manière globale un procédé de réception d'un signal de données reçu selon un mode de réalisation particulier de l'invention.

Une phase d'initialisation, référencée I, comprend une première étape E1, au cours de laquelle on effectue une égalisation bloc à bloc d'un signal reçu composé de blocs de symboles reçu, de façon à obtenir pour chaque bloc de symboles reçu un bloc dé symboles égalisés formés chacun d'un ensemble de bits.

Les étapes suivantes sont relatives à une itération d'amélioration d'une estimation du signal reçu, référencée II, pour un bloc de symboles égalisés donné, dit bloc de symboles égalisés courant.

Lors d'une étape E2, on met en oeuvre un décodage bit à bit d'un sous-ensemble courant de bits appartenant au bloc de symboles égalisés courant, de façon à obtenir un où plusieurs bits décodés.

Plus précisément, l'étape E2 comprend :

- une étape E21, au cours de laquelle on extrait un ou plusieurs bits d'un des symboles égalisés (du bloc de symboles égalisés courant) ;
- une étape E22, au cours de laquelle on met à jour le sous-ensemble courant de bits, à partir du ou des bits extraits à l'étape E21 ;
- une étape E23, au cours de laquelle on décode le sous-ensemble de bits mis à jour à l'étape E22, de façon à générer le ou les bits décodés précités.

Ensuite, lors d'une étape E3, on met à jour un ou plusieurs symboles estimés lors de la phase d'initialisation I ou mis à jour lors d'une itération d'amélioration précédente, en fonction du ou des bits décodés obtenus à l'étape E2, de façon à obtenir un bloc de symboles estimés mis à jour.

Enfin, lors d'une étape E4, on met à jour l'annulation d'interférences sur un des symboles du signal reçu, en fonction du bloc de symboles estimés mis à jour obtenu à l'étape E3, de façon à obtenir un bloc de symboles égalisés mis à jour (aussi appelé par la suite bloc de symboles égalisés amélioré). Le procédé de réception étant itératif, on retourne à l'étape E2 à la fin de l'étape E4. On note que le bloc de symboles égalisés amélioré devient le bloc de symboles égalisés courant de l'itération suivante.

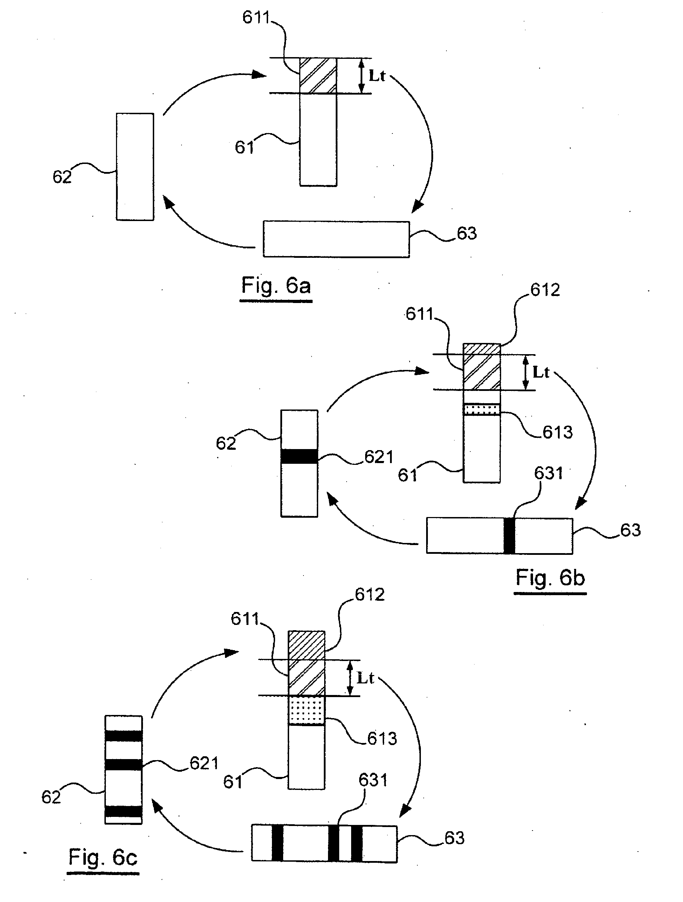

Les figures 6a à 6c illustrent de façon schématique l'itération (courante) d'amélioration de l'estimation du signal reçu mise en oeuvre selon un mode de réalisation particulier de l'invention.

A l'instant t0 (figure 6a), on suppose que l'ensemble courant de bits 61 à décoder, le bloc de symboles égalisés courant 62 et le bloc de symboles estimés 63 proviennent d'une itération d'amélioration précédente. A ce même instant t0, on amorce le décodage canal (décodage bit à bit) du premier bit d'un sous-ensemble courant de bits 611, appartenant au bloc de symboles égalisés courant 62.

A l'instant t0+1 (figure 6b), le module de décodage canal CC$^{-1}$ 421 (en référence à la figure 4) traite, en fonction de sa longueur de troncature Lt, Lt bits du sous-ensemble de bits 611, de façon à obtenir un premier bit décodé 612. A ce même instant t0+1, on met à jour un symbole estimé 631 (dit symbole estimé mis à jour) du bloc de symboles estimés 63, à partir du premier bit décodé 612 et d'un ou plusieurs bits obtenus à l'itération précédente. Encore à ce même instant t0+1, on met à jour l'annulation d'interférences sur un des symboles du signal reçu, à partir du symbole estimé mis à jour 631 et d'un ou plusieurs symboles estimés à l'itération précédente, de façon à obtenir un symbole égalisé mis à jour 621 (aussi appelé symbole égalisé amélioré). Toujours à ce même instant t0+1, on extrait un bit (dit bit extrait) du symbole égalisé mis à jour 621, puis on l'insère 613 dans le sous-ensemble de bits 611.

Il est important de noter que pour être utilisé à l'itération courante, le bit extrait 613 doit être placé dans l'ensemble courant de bits 61 à décoder après la zone en cours de décodage, sinon il ne sera utilisé qu'à la prochaine itération. Cette distribution, bien entendu, dépend directement du schéma d'entrelacement mis en oeuvre par le module d'entrelacement Π 422$_2$ (en référence à la figure 4).

A l'instant t0+p (figure 6c), le p-ième bit décodé va permettre de recréer avec des bits décodés à cette itération (t0+p) ou à l'itération précédente un nouveau symbole estimé mis à jour. Ce nouveau symbole estimé mis à jour et d'autres symboles estimés à cette itération (t0+p) ou à l'itération précédente vont permettre de mettre à jour l'annulation d'interférences pour obtenir un nouveau symbole égalisé mis à jour, dont un bit sera extrait pour être inséré dans l'ensemble courant de bits 61 à décoder.

On présente désormais en relation avec la figure 7, les performances du procédé de réception de l'invention obtenues par simulation d'un système MIMO 2x2 avec un code à dispersion linéaire transmettant 4 symboles par blocs. Ce système met en oeuvre une modulation de type 16QAM avec « mapping » de Gray, un entrelacement de 2400bits et un codage convolutif de rendement 1/2.

Plus précisément, la figure 7 présente deux courbes référencées 71 et 72 illustrant le nombre d'opérations à effectuer après chaque bit décodé en fonction de l'évolution d'une itération (exprimée en pourcentage (%) : 0% correspondant au début de l'itération et 100% à la fin de l'itération), pour un récepteur classique de type MMSE-IC et le récepteur de l'invention, respectivement.

Comme l'illustre la figure 7, le récepteur de l'invention présente des performances satisfaisantes puisqu'il apporte une réduction du temps de traitement de l'ordre de 50% par rapport au récepteur classique. En d'autres termes, à temps de traitement identique, le récepteur de l'invention effectue environ 5 fois moins d'opérations (16 opérations au lieu de 79).

La figure 8 présente enfin un synoptique simplifié du récepteur itératif de l'invention, qui comprend une mémoire M 81, une unité de traitement P 80, équipée par exemple d'un microprocesseur, et pilotée par le programme d'ordinateur Pg 82. A l'initialisation, les instructions de code du programme d'ordinateur 82 sont par exemple chargées dans une mémoire RAM 81 avant d'être exécutées par le processeur de l'unité de traitement 80. L'unité de traitement 80 reçoit en entrée le signal de données reçu **r**. Le microprocesseur µP de l'unité de traitement 80 réalise l'égalisation et l'estimation itératives du signal, décrites en détail en relation avec les figures 4, 5 et 6, selon les instructions du programme Pg 82. L'unité de traitement 80 délivre en sortie un signal (binaire) estimé $\hat{\mathbf{d}}$ et un signal M-aire estimé $\hat{\mathbf{x}}$.

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

**Revendications**

1. Procédé de réception d'un signal de données reçu (**r**) composé d'au moins un bloc de symboles reçu et représentatif d'un signal source,
   ledit procédé mettant en oeuvre une phase d'initialisation (**I**) comprenant une étape d'égalisation bloc à bloc (E1) dudit signal reçu, délivrant pour chaque bloc de symboles reçu un bloc de symboles égalisés formés chacun d'un ensemble de bits,
   le procédé comprend au moins une itération d'amélioration (II) d'une estimation dudit signal reçu comprenant les étapes suivantes, pour un bloc de symboles égalisés courant :

   - obtention (E2) d'au moins un bit décodé, par décodage bit à bit d'un sous-ensemble courant d'au moins un bit appartenant audit bloc de symboles égalisés courant ;
   - mise à jour (E3) d'au moins un symbole estimé lors de ladite phase d'initialisation ou mis à jour lors d'une itération d'amélioration précédente, en fonction du ou des bits décodés, délivrant un bloc de symboles estimés mis à jour, constitué du ou des bits décodés et d'au moins un bit décodé lors d'au moins une itération d'amélioration précédente ou lors de ladite phase d'initialisation ;
   - détermination (E4) d'un bloc de symboles égalisés amélioré par annulation des interférences à partir d'un égaliseur de type annuleur d'interférences dont les coefficients sont mis à jour après chaque bit décodé, tenant compte dudit bloc de symboles estimés mis à jour, ledit bloc de symboles égalisés amélioré devenant le bloc de symboles égalisés courant d'une éventuelle itération suivante.

2. Procédé de réception selon la revendication 1, dans laquelle ladite étape d'obtention comprend les étapes suivantes :

   - extraction (E21) d'au moins un bit d'un desdits symboles égalisés, dits bits extraits ;
   - mise à jour (E22) dudit sous-ensemble courant, à partir d'au moins un desdits bits extraits, délivrant un sous-ensemble mis à jour ;
   - décodage canal (E23) dudit sous-ensemble mis à jour, délivrant le ou les bits décodés.

3. Procédé de réception selon les revendications 1 et 2, dans laquelle ladite étape d'obtention met en oeuvre un désentrelacement desdits ensembles de bits desdits symboles égalisés dudit bloc de symboles égalisés courant, inverse d'un entrelacement mis en oeuvre à l'émission.

4. Procédé de réception selon la revendication 3, dans laquelle ledit désentrelacement restitue, dans un ordre d'origine, des bits entrelacés à l'émission selon un entrelacement distribuant lesdits bits uniformément dans lesdits blocs de symboles et garantissant que deux bits associés consécutivement à un bloc de symbole seront transmis dans deux symboles distincts.

5. Procédé de réception selon les revendications 3 et 4, dans laquelle ledit désentrelacement est tel que deux bits désentrelacés consécutifs proviennent de deux positions de bits distinctes au sein de deux blocs de symboles égalisés distincts.

6. Procédé de réception selon la revendication 5, dans laquelle, pour un entrelaceur de taille $T = nb_{bloc} * Q * nb_{bit}$ et pour un bit donné occupant, avant désentrelacement, une position initiale définie par:

$$b * Q * nb_{bit} + s * nb_{bit} + p$$

ledit désentrelacement est tel que ledit bit donné occupe, après désentrelacement, une position finale définie par :

$$\Pi_{p}(p,s,\Pi_{b}(b)) * Q * nb_{bloc} + \Pi_{s}(s,\Pi_{b}(b)) * nb_{bloc} + \Pi_{b}(b)$$

où :

$nb_{bloc}$ correspond au nombre de blocs de symboles ;
$Q$ correspond au nombre de symboles formant un desdits blocs ;
$nb_{bit}$ correspond au nombre de bits formant un desdits symboles ;
$\Pi_{b}(b)$ désigne la loi permettant la distribution des blocs de symboles ;
$\Pi_{s}(s, \Pi_{b}(b)) = (s - \Pi_{b}(b))\mod(Q)$ désigne la loi permettant la distribution des symboles à l'intérieur de chaque bloc de symboles ;
$\Pi_{p}(p,s,\Pi_{b}(b))= (p-\Pi_{b}(b)-\varepsilon*(\Pi_{b}(b)/Q)+\Pi_{s}(s,\Pi_{b}(b)))\mod(nb_{bit})$ désigne la loi permettant la distribution des bits à l'intérieur de chaque symbole, avec :

$$\varepsilon = \begin{cases} 1 & si \quad Q\mod(nb_{bit}) = 0 \\ 0 & si \quad Q\mod(nb_{bit}) > 0 \end{cases}$$

**7.** Dispositif de réception (400) d'un signal de données reçu composé d'au moins un bloc de symboles reçu et représentatif d'un signal source,
ledit dispositif comprenant des moyens d'initialisation comprenant des moyens d'égalisation (20) bloc à bloc dudit signal reçu, délivrant pour chaque bloc de symboles reçu un bloc de symboles égalisés formés chacun d'un ensemble de bits, le dispositif comprend des moyens d'amélioration d'une estimation dudit signal reçu, mettant en oeuvre au moins une fois, sous la forme d'une itération, et pour un bloc de symboles égalisés courant :

- des moyens d'obtention d'au moins un bit décodé, par décodage bit à bit d'un sous-ensemble d'au moins un bit appartenant audit bloc de symboles égalisés courant ;
- des moyens de mise à jour d'au moins un symbole estimé lors de ladite phase d'initialisation ou mis à jour lors d'une itération d'amélioration précédente, en fonction du ou des bits décodés, délivrant un bloc de symboles estimés mis à jour, constitué du ou des bits décodés et d'au moins un bit décodé lors d'au moins une itération d'amélioration précédente ou lors de ladite phase d'initialisation ;
- des moyens de détermination (43) d'un bloc de symboles égalisés amélioré par annulation des interférences à partir d'un égaliseur de type annuleur d'interférences dont les coefficients sont mis à jour après chaque bit décodé, tenant compte dudit bloc de symboles estimés mis à jour, ledit bloc de symboles égalisés amélioré devenant le bloc de symboles égalisés courant d'une éventuelle itération suivante.

**8.** Produit programme d'ordinateur téléchargeable depuis un réseau de communication et/ou enregistré sur un support lisible par ordinateur et/ou exécutable par un processeur (80) le produit comprend des instructions de code de programme (82) pour l'exécution des étapes du procédé de réception d'au moins une des revendications 1 à 6, lorsque ledit programme est exécuté sur un ordinateur.

**Claims**

**1.** Method of receiving a received data signal (r) consisting of at least one received block of symbols and representative of a source signal, said method applying an initialization phase (I) comprising a step (E1) for block-by-block equalization of said received signal, delivering, for each received block of symbols, an equalized block of symbols each formed by a set of bits, the method comprising at least one iteration (II) for improving an estimation of said received signal comprising the following steps, for a current equalized block of symbols:

- obtaining (E2) at least one decoded bit by bit-by-bit decoding of a current subset of at least one bit belonging to said current equalized block of symbols;
- updating (E3) at least one symbol estimated during said initialization phase or updated during a preceding improvement iteration, according to the decoded bit or bits, delivering an updated block of estimated symbols, consisting of the decoded bit or bits and at least one decoded bit during at least one preceding improvement iteration or during said initialization phase;

- determining (E4) an improved equalized block of symbols by cancelling the interferences based on an interference cancelling type equalizer whose coefficients are updated after each decoded bit, taking into account said updated block of estimated symbols, said improved block of equalized symbols becoming the current block of equalized symbols of a possible next iteration.

2. Reception method according to Claim 1, wherein said obtaining step comprises the following steps:

- extraction (E21) of at least one bit of one of said equalized symbols, called the extracted bits;
- updating (E22) of said current subset, based on at least one of said extracted bits, delivering an updated subset;
- channel decoding (E23) for said updated subset, delivering the decoded bit or bits.

3. Reception method according to Claims 1 and 2, wherein said obtaining step applies a disinterleaving of said sets of bits of said equalized symbols of said current block of equalized symbols, the reverse of an interleaving applied on transmission.

4. Reception method according to Claim 3, wherein said disinterleaving restores, in an original order, the bits interleaved on transmission according to an interleaving distributing said bits uniformly in said blocks of symbols and guaranteeing that two bits consecutively associated with a block of symbols will be transmitted in two distinct symbols.

5. Reception method according to Claims 3 and 4, wherein said disinterleaving is such that two consecutive disinterleaved bits originate from two distinct bit positions within two distinct blocks of equalized symbols.

6. Reception method according to Claim 5, wherein, for an interleaver of size $T = nb_{block}*Q*nb_{bit}$ and, for a given bit occupying, before disinterleaving, an initial position defined by:

$$b*Q*nb_{bit} + s*nb_{bit} + p$$

said disinterleaving is such that said given bit occupies, after disinterleaving, a final position defined by:

$$\Pi_p(p,s,\Pi_b(b))*Q*nb_{block} + \Pi_s(s, \Pi_b(b))*nb_{block} + \Pi_b(b)$$

in which:

$nb_{block}$ corresponds to the number of blocks of symbols;
Q corresponds to the number of symbols forming one of said blocks;
$nb_{bit}$ corresponds to the number of bits forming one of said symbols;
$\Pi_b(b)$ designates the law making it possible to distribute the blocks of symbols;
$\Pi_s(s,\Pi_b(b))=(s - \Pi_b(b))mod(Q)$ designates the law making it possible to distribute the symbols within each block of symbols;

$$\Pi_p(p,s,\Pi_b(b)) = (p-\Pi_b(b)-\varepsilon*(\Pi_b(b)/Q)+\Pi_s(s,\Pi_b(b)))mod(nb_{bit})$$

designates the law making it possible to distribute the bits within each symbol,
with:

$$\varepsilon = \begin{cases} 1 \text{ if } Qmod(nb_{bit}) = 0 \\ 0 \text{ if } Qmod(nb_{bit}) > 0 \end{cases}$$

7. Device (400) for receiving a received data signal consisting of at least one received block of symbols and representative of a source signal,

said device comprising initialization means comprising means (20) of equalizing said received signal block by block, delivering, for each received block of symbols, a block of equalized symbols each formed by a set of bits, the device comprising means of improving an estimation of said received signal, applying, at least once, in the form of an iteration, and for a current block of equalized symbols:

- means of obtaining at least one decoded bit, by bit-by-bit decoding of a subset of at least one bit belonging to said current block of equalized symbols;
- means of updating at least one symbol estimated during said initialization phase or updated during a preceding improvement iteration, according to the decoded bit or bits, delivering an updated block of estimated symbols, consisting of the decoded bit or bits and at least one bit decoded during at least one preceding improvement iteration or during said initialization phase;
- means (43) of determining an improved block of equalized symbols by cancelling the interferences using an interference cancelling type equalizer whose coefficients are updated after each decoded bit, taking into account said updated block of estimated symbols, said improved block of equalized symbols becoming the current block of equalized symbols of a possible next iteration.

8. Computer program product that can be downloaded from a communication network and/or stored on a medium that can be read by computer and/or executed by a processor (80), the product comprising program code instructions (82) for the execution of the steps of the reception method of at least one of Claims 1 to 6, when said program is executed on a computer.

**Patentansprüche**

1. Verfahren zum Empfang eines empfangenen Datensignals (r), das aus mindestens einem empfangenen und für ein Quellensignal repräsentativen Block von Symbolen besteht,

wobei das Verfahren eine Initialisierungsphase (I) anwendet, die einen Schritt der Block-für-Block-Entzerrung (E1) des empfangenen Signals enthält, der für jeden empfangenen Block von Symbolen einen Block von entzerrten Symbolen liefert, die je von einer Gruppe von Bits gebildet werden, wobei das Verfahren mindestens eine Verbesserungs-Iteration (II) einer Schätzung des empfangenen Signals enthält, die für einen laufenden Block von entzerrten Symbolen die folgenden Schritte enthält:

- Erhalt (E2) mindestens eines decodierten Bits durch Bit-für-Bit-Decodierung einer laufenden Untergruppe von mindestens einem Bit, die zum laufenden Block von entzerrten Symbolen gehört;
- Aktualisierung (E3) mindestens eines in der Initialisierungsphase geschätzten oder bei einer vorhergehenden Verbesserungs-Iteration aktualisierten Symbols in Abhängigkeit von dem oder den decodierten Bits, die einen aktualisierten Block von geschätzten Symbolen liefert, der aus dem oder den decodierten Bits und aus mindestens einem bei einer vorhergehenden Verbesserungs-Iteration oder in der Initalisierungsphase decodierten Bit besteht;
- Bestimmung (E4) eines verbesserten Blocks von entzerrten Symbolen durch Unterdrückung der Interferenzen ausgehend von einem Entzerrer vom Typ Interferenzunterdrücker, dessen Koeffizienten nach jedem decodierten Bit aktualisiert werden, unter Berücksichtigung des aktualisierten Blocks von geschätzten Symbolen,

wobei der verbesserte Block von entzerrten Symbolen zum laufenden Block von entzerrten Symbolen einer möglichen folgenden Iteration wird.

2. Empfangsverfahren nach Anspruch 1, bei dem der Erhaltungsschritt die folgenden Schritte enthält:

- Entnahme (E21) mindestens eines Bits aus einem der entzerrten Symbole, entnommene Bits genannt;
- Aktualisierung (E22) der laufenden Untergruppe ausgehend von mindestens einem der entnommenen Bits, die eine aktualisierte Untergruppe liefert;
- Kanaldecodierung (E23) der aktualisierten Untergruppe, die das oder die decodierte Bits liefert.

3. Empfangsverfahren nach den Ansprüchen 1 und 2, bei dem der Erhaltungsschritt eine Entschachtelung der Gruppen von Bits der entzerrten Symbole des laufenden Blocks von entzerrten Symbolen umgekehrt zu einer beim Senden angewendeten Verschachtelung anwendet.

**4.** Empfangsverfahren nach Anspruch 3, bei dem die Entschachtelung in einer Ursprungsreihenfolge beim Senden gemäß einer Verschachtelung verschachtelte Bits wiederherstellt, die die Bits gleichmäßig in den Blöcken von Symbolen verteilt und gewährleistet, dass zwei nacheinander einem Symbolblock zugeordnete Bits in zwei unterschiedlichen Symbolen übertragen werden.

**5.** Empfangsverfahren nach den Ansprüchen 3 und 4, bei dem die Entschachtelung so ist, dass zwei aufeinanderfolgende entschachtelte Bits von zwei unterschiedlichen Bitpositionen innerhalb von zwei unterschiedlichen Blöcken von entzerrten Symbolen kommen.

**6.** Empfangsverfahren nach Anspruch 5, bei dem für einen Verschachteler der Größe $T = nb_{bloc} * Q * nb_{bit}$ und für ein gegebenes Bit, das vor der Entschachtelung eine Anfangsposition einnimmt, die definiert ist durch:

$$b * Q * nb_{bit} + s * nb_{bit} + p$$

die Entschachtelung so ist, dass das gegebene Bit nach der Entschachtelung eine Endposition einnimmt, die definiert ist durch:

$$\Pi_p(p,s,\Pi_b(b))*Q*nb_{bloc} + \Pi_s(s,\Pi_b(b))*nb_{bloc} + \Pi_b((b)$$

wobei:

$nb_{bloc}$ der Anzahl von Blöcken von Symbolen entspricht;
Q der Anzahl von Symbolen entspricht, die einen der Blöcke formen;
$nb_{bit}$ der Anzahl von Bits entspricht, die eines der Symbole formen;
$\Pi_b(b)$ das Gesetz bezeichnet, das die Verteilung der Blöcke von Symbolen erlaubt;
$\Pi_s(s,\Pi_b(b)) = (s-\Pi_b(b))\bmod(Q)$ das Gesetz bezeichnet, das die Verteilung von Symbolen innerhalb jedes Blocks von Symbolen erlaubt;

$$\Pi_p(p,s,\Pi_b(b)) = (p-\Pi_b(b))-$$
$$\varepsilon*(\Pi_b(b)/Q)+\Pi_s(s,\Pi_b(b)))\bmod(nb_{bit})$$

das Gesetz bezeichnet, das die Verteilung der Bits innerhalb jedes Symbols erlaubt, mit:

$$\varepsilon = \begin{cases} 1 \text{ wenn } Q\bmod(nb_{bit})=0 \\ 0 \text{ wenn } Q\bmod(nb_{bit})>0 \end{cases}$$

**7.** Empfangsvorrichtung (400) eines empfangenen Datensignals, das aus mindestens einem empfangenen und für ein Quellensignal repräsentativen Block von Symbolen besteht, wobei die Vorrichtung Initalisierungseinrichtungen enthält, die Einrichtungen (20) zur Block-für-Block-Entzerrung des empfangenen Signals enthalten, die für jeden empfangenen Block von Symbolen einen Block von entzerrten Symbolen liefern, die je von einer Gruppe von Bits gebildet werden, wobei die Vorrichtung Einrichtungen zur Verbesserung einer Schätzung des empfangenen Signals enthält, die mindestens einmal in Form einer Iteration und für einen laufenden Block von entzerrten Symbolen anwenden:

- Einrichtungen für den Erhalt mindestens eines decodierten Bits durch Bit-für-Bit-Decodierung einer Untergruppe von mindestens einem Bit, die zum laufenden Block von entzerrten Symbolen gehört;
- Einrichtungen zur Aktualisierung mindestens eines in der Initialisierungsphase geschätzten oder bei einer vorhergehenden Verbesserungs-Iteration aktualisierten Symbols in Abhängigkeit von dem oder den decodierten Bits, die einen aktualisierten Block von geschätzten Symbolen liefern, der aus dem oder den decodierten Bits und aus mindestens einem bei mindestens einer vorhergehenden Verbesserungs-Iteration oder in der Initalisierungsphase decodierten Bit besteht;

- Einrichtungen zur Bestimmung (43) eines verbesserten Blocks von entzerrten Symbolen durch Unterdrückung der Interferenzen ausgehend von einem Entzerrer vom Typ Interferenzunterdrücker, dessen Koeffizienten nach jedem decodierten Bit aktualisiert werden, unter Berücksichtigung des aktualisierten Blocks von geschätzten Symbolen, wobei der verbesserte Block von entzerrten Symbolen zum laufenden Block von entzerrten Symbolen einer möglichen folgenden Iteration wird.

8. Computerprogrammprodukt, das von einem Kommunikationsnetzwerk heruntergeladen und/oder auf einem computerlesbaren Träger gespeichert und/oder von einem Prozessor (80) ausgeführt werden kann, wobei das Produkt Programmcodeanweisungen (82) für die Ausführung der Schritte des Empfangsverfahrens mindestens eines der Ansprüche 1 bis 6 enthält, wenn das Programm in einem Computer ausgeführt wird.

Fig. 1

Fig. 2

Fig. 8

Fig. 3

Fig. 4

Fig. 5

Fig. 7

Fig. 6a

Fig. 6b

Fig. 6c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *IEEE Transactions on Signal processing,* 2002, vol. 50 (10), 2538-2546

- Low complexity iterative receiver for non-orthogonal space-time block code with channel coding. **BOUVET P-J et al.** VEHICULAR TECHNOLOGY CONFERENCE. IEEE, 26 Septembre 2004, 1289-1293